# EUROPEAN PATENT SPECIFICATION

(11) **EP 4 155 532 B1**
(45) Date of publication and mention of the grant of the patent: **03.12.2025**
(21) Application number: 21808697.3
(22) Date of filing: 19.05.2021
(51) Int. Cl.: F03D 7/00, F03D 17/00, F03D 80/60

(54) **COOLING CONTROL METHOD AND SYSTEM FOR WIND-DRIVEN GENERATOR, DEVICE, AND STORAGE MEDIUM**
KÜHLSTEUERUNGSVERFAHREN UND -SYSTEM FÜR WINDGETRIEBENEN GENERATOR, VORRICHTUNG UND SPEICHERMEDIUM
PROCÉDÉ ET SYSTÈME DE RÉGULATION DE REFROIDISSEMENT POUR GÉNÉRATEUR ÉOLIEN, DISPOSITIF ET SUPPORT D'ENREGISTREMENT

(30) Priority: 21.05.2020 CN 202010435895
(43) Date of publication of application: 29.03.2023
(73) Proprietor: Zhejiang University, Hangzhou, Zhejiang 310058 (CN); Shanghai Electric Wind Power Group Co., Ltd., Shanghai 200241 (CN)
(72) Inventor: WEN, Hui, Hangzhou, Zhejiang 310058 (CN); WU, Lijian, Hangzhou, Zhejiang 310058 (CN); LI, Huayang, Shanghai 200241 (CN); SHI, Yang, Hangzhou, Zhejiang 310058 (CN); CUI, Ming, Shanghai 200241 (CN)
(74) Representative: Dai, Simin
(86) International application number: PCT/CN2021/094659
(87) International publication number: WO 2021/233344

(56) References cited:
- EP-B1- 2 932 093
- CN-A- 102 545 254
- CN-A- 104 564 529
- CN-A- 104 806 743
- CN-A- 105 089 934
- CN-A- 106 164 477
- CN-A- 108 204 336
- CN-A- 108 266 337
- CN-A- 108 604 849
- CN-A- 109 667 730
- CN-A- 109 667 730
- CN-A- 110 374 798
- CN-A- 111 648 915
- CN-B- 108 132 686
- US-B2- 10 400 753
- US-B2- 8 569 904

## Description

### TECHNICAL FIELD

The present disclosure relates to the field of wind turbine generator, specifically to a cooling control method and system for a wind turbine generator, a device and a storage medium.

### BACKGROUND

Copper loss and iron loss generated in operation of a wind turbine generator cause temperatures of various components in the turbine to rise. High temperature is one of main causes for the failure of the wind turbine generator. For example, every temperature rise of 10°C in the insulation of the winding may decrease about half of the insulation life, and a temperature rise in a permanent magnet may increase the probability of irreversible demagnetization. Therefore, it is necessary to control temperatures of some critical components of the wind turbine generator to be below reasonable temperature limits. Currently, common internal cooling manners for a wind power generator include air cooling and water-jacket cooling. The former manner is that a high-power fan drives the cooling air openly or circularly through the generator to cool various components. Common cooling paths include an airgap between a stator and a rotor, a radial or axial ventilation duct provided within a core of the stator, and a radial ventilation duct provided within the rotor and rotating in sync with the rotor. The latter manner is that heat is usually removed through a cooling liquid channel provided within an iron yoke of the stator or a shell, where cooling liquid is driven by a circulating pump.

Usually, cooling powers of various wind turbine generators in a cooling manner can be adjusted or switched. For example, in the water-jacket cooling manner, a bypass valve can be used to adjust flow of the coolant or its inflow temperature, whilst the circulating pump usually remains in a long-term operation state. In the air cooling manner, flow of the cooling air can be adjusted by controlling a switch or frequency of the fan's motor. Furthermore, a temperature sensor is utilized to detect a temperature of the wind power generator. When the temperature exceeds a preset value, the cooling power is increased. A typical cooling control manner for F-Level insulation is as follows: using a temperature sensor to detect a current temperature of a wind power generator, and when the current temperature is 140°C, 120°C or 100°C, sending an order of alarming, fully running a cooling device or half-running the cooling device, respectively. In the related art, it only depends on measuring a temperature of a critical component (such as winding) in real-time as a single-source adjustment reference to control a cooling system of the wind power generator. Although the temperature can be guaranteed not to exceed the limit, the optimal efficiency of the generator during operation and its optimal durability cannot be guaranteed.

Prior art document CN109667730A discloses an intelligent heat dissipation method and device for the wind turbine generator of the invention selects the generator temperature and compares it with a preset threshold, thereby selecting the power source of the gear vane pump according to the comparison result and the output power.

Prior art document US 8569904 B2 discloses a method of controlling a temperature of a component of a wind turbine, where a set point temperature of the component is defined, and the actual temperature of the component is determined and compared with the defined set point temperature, and the actual temperature of the component is controlled by controlling the output power of the wind turbine based on the result of comparison.

Prior art document CN 108132686 B discloses a cooling device and a cooling method for a wind turbine, which can be used in high temperature areas, when the air temperature in the environment where the converter is cooled is too high, the cooling effect is deteriorated or effective cooling cannot be performed, and it can reliably dissipate heat and ensure the operation of the wind turbine in high temperature areas.

### SUMMARY

The present invention is set out in the appended set of claims.

The present disclosure provides cooling control methods and systems for wind turbine generators, devices and storage media, which aim to solve the technical problem in the related art including difficulties in maintaining the power generation efficiency of the turbine while guaranteeing the cooling efficiency and reliability of the cooling device.

The present disclosure solves the above technical problems through the following technical solutions.

The present disclosure provides a cooling control method of a wind turbine generator, wherein a cooling device at least partially utilizes electric energy output by the wind turbine generator to cool the wind turbine generator. The cooling control method comprises steps of:
S1, obtaining an output power of the wind turbine generator; and
S2, controlling a consumption power of the cooling device according to the output power of the wind turbine generator and a rated power of the wind turbine generator.

The present disclosure also provides a cooling control system of a wind turbine generator, wherein a cooling device at least partially utilizes electric energy output by the wind turbine generator to cool the wind turbine generator. The cooling control system comprises an output power obtaining module and a consumption power controlling module.

The output power obtaining module is configured to obtain an output power of the wind turbine generator; and
the consumption power controlling module is configured to control a consumption power of the cooling device according to the output power of the wind turbine generator and a rated power of the wind turbine generator.

The present disclosure also provides an electronic device including a memory, a processor and a computer program, where the computer program is stored on the memory and can run on the processor. When the processor executes the computer program, the above-mentioned cooling control method of the wind turbine generator can be implemented.

The present disclosure also provides a computer-readable storage medium on which a computer program is stored, and when the computer program is executed by a processor, steps of the above-mentioned cooling control method of the wind turbine generator can be implemented.

The positive effects of the present disclosure include that the present disclosure allows to adjust the consumption power of the cooling device depending on the output power of the wind turbine generator, so as to optimize utilization of wind energy, and to improve the comprehensive performance of the turbine in electromagnetic properties and heat dissipation as well as the reliability and lifetime of the turbine's critical components that are affected by temperature.

### BRIEF DESCRIPTION OF THE DRAWINGS

FIG. 1 is a flowchart of a cooling control method of a wind turbine generator according to Embodiment 1 of the present disclosure.
FIG. 2 is a flowchart of implementing step 102 in Embodiment 2 of the present disclosure.
FIG. 3 is a partial flowchart of a cooling control method of a wind turbine generator according to Embodiment 3 of the present disclosure.
FIG. 4 is a partial flowchart of a cooling control method of a wind turbine generator according to Embodiment 4 of the present disclosure.
FIG. 5 is a partial flowchart of a cooling control method of a wind turbine generator according to Embodiment 5 of the present disclosure.
FIG. 6 is a partial flowchart of a cooling control method of a wind turbine generator according to Embodiment 6 of the present disclosure.
FIG. 7 is a schematic diagram illustrating modules in a cooling control system of a wind turbine generator according to Embodiment 7 of the present disclosure.
FIG. 8 is a schematic diagram illustrating modules of an output power obtaining module in Embodiment 8 of the present disclosure.
FIG. 9 is a schematic diagram illustrating modules of a second power controlling unit in Embodiment 9 of the present disclosure.
FIG. 10 is a schematic diagram illustrating modules in a cooling control system of a wind turbine generator according to Embodiment 10 of the present disclosure.
FIG. 11 is a schematic diagram illustrating partial modules of a second power controlling unit in Embodiment 11 of the present disclosure.
FIG. 12 is a schematic diagram illustrating modules in a cooling control system of a wind turbine generator according to Embodiment 12 of the present disclosure.
FIG. 13 is a structural schematic diagram of an electronic device according to Embodiment 13 of the present disclosure.

### DETAILED DESCRIPTION

The present disclosure is further described through embodiments below, but the present disclosure is not limited to the scope of the described embodiments.

### Embodiment 1

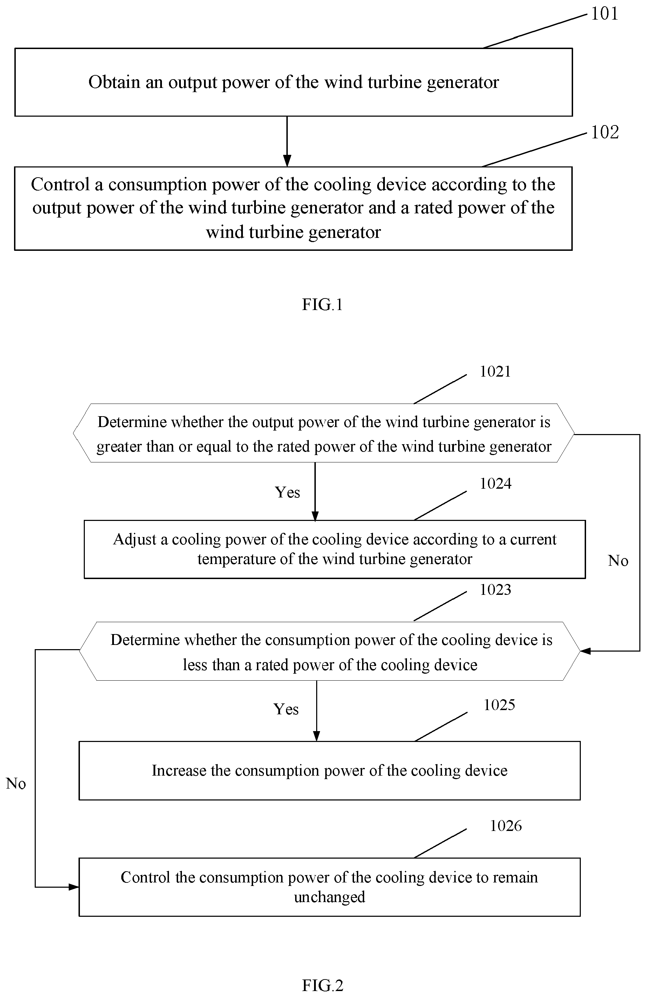

This embodiment provides a cooling control method of a wind turbine generator, where a cooling device at least partially utilizes electric energy output from the wind turbine generator to cool the same. As shown in FIG. 1, the cooling control method includes the following.

Step 101: obtaining an output power of the wind turbine generator.

Step 102: controlling a consumption power of the cooling device according to the output power of the wind turbine generator and a rated power of the wind turbine generator.

The cooling device is positioned as actually needed. Specifically, the cooling device may be entirely placed inside the wind turbine generator, or else the cooling device may be entirely placed outside the wind turbine generator. In addition, a part of the cooling device may be placed inside the wind turbine generator, while the other part thereof may be placed outside the turbine, for instance, a heat dissipator being placed outside the wind power generator while other components being placed inside the generator.

The present embodiment allows to regulate the consumption power of the cooling device depending on the output power of the wind turbine generator, so as to optimize utilization of wind energy, and to improve the comprehensive performance of the turbine in electromagnetic properties and heat dissipation as well as the reliability and lifetime of the turbine's key components which are sensitive to temperature.

### Embodiment 2

This embodiment provides a cooling control method of a wind turbine generator, which is of further improvement to Embodiment 1. As shown in FIG. 2, step 102 can include the following.

Step 1021: determining whether the output power of the wind turbine generator is greater than or equal to the rated power of the wind turbine generator, if yes, executing step 1024, and if no, executing step 1023.

Step 1023: determining whether the consumption power of the cooling device is less than the rated power of the cooling device, if the consumption power of the cooling device is less than the rated power of the cooling device, executing step 1025, and if the consumption power of the cooling device is larger than or equal to the rated power of the cooling device, executing step 1026.

Step 1024: adjusting a cooling power of the cooling device according to a current temperature of the wind turbine generator.

Step 1025: increasing the consumption power of the cooling device.

Step 1026: controlling the consumption power of the cooling device to remain unchanged.

Steps 101 to 1026 are performed again every once in a while, so as to realize the cyclic control for the cooling device.

The cooling control method in this embodiment gradually increases the consumption power of the cooling device, when the output power of the wind turbine generator reaches the rated power thereof while the consumption power of the cooling device does not reach the rated power thereof. As such, in a case where the turbine is operating at the rated output power, the cooling power can be elevated as much as possible, so that temperatures of the turbine's critical components (e.g., a winding, a permanent magnet) can be further decreased. Therefore, it allows to not only improve reliability and lifetime of those critical components, but also reduce the loss in and improve the efficiency of the turbine.

### Embodiment 3

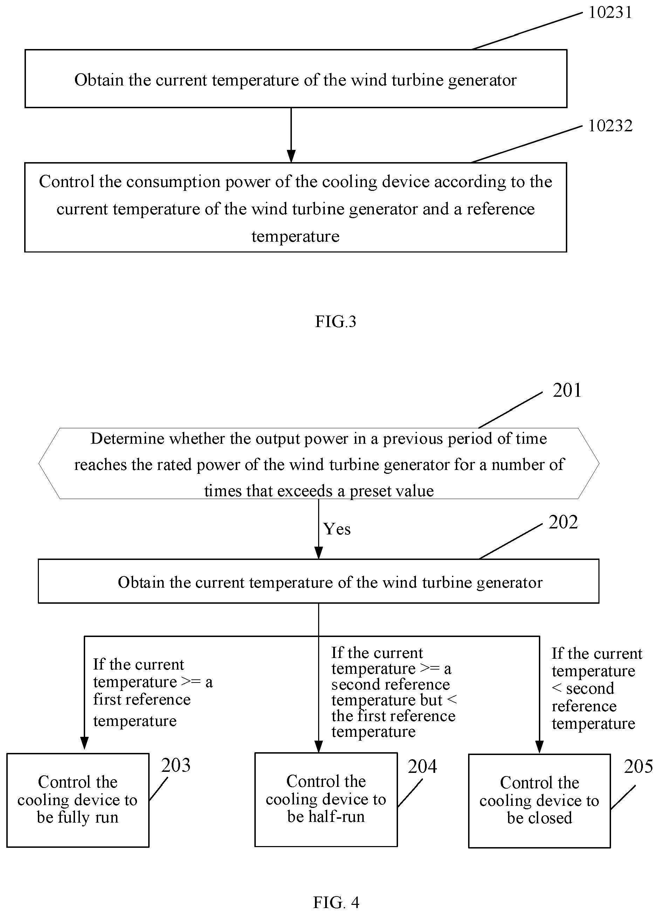

This embodiment provides a cooling control method of a wind turbine generator, which further improves Embodiment 1 or 2. Specifically, as shown in FIG. 3, in step 102, when the output power of the wind turbine generator is less than its rated power, the method further includes the following.

Step 10231: obtaining a current temperature of the wind turbine generator.

Step 10232: controlling the consumption power of the cooling device according to one or more reference temperatures and the current temperature of the wind turbine generator.

Specifically, in step 10232, the cooling device may be adjusted by setting a plurality of reference temperatures. For example, the cooling device is controlled to be fully run, if the current temperature is greater than or equal to a first reference temperature; the cooling device is controlled to be half run, if the current temperature is greater than or equal to a second reference temperature and less than the first reference temperature; and the cooling device is controlled to be closed, if the current temperature is less than the second reference temperature.

It should be understood that the above manner of setting three-stage reference temperatures is an example. In practice, the number of reference temperatures can be set differently according to specific needs. For example, it is possible to set ten-stage reference temperatures. In a case that the current temperature reaches a reference temperature set for a first stage, the cooling device can be set to run at an one-tenth rate, or the power of the cooling device can be adjusted upward to a certain preset power value.

### Embodiment 4

In this embodiment, a cooling control method of a wind turbine generator is provided to further improve any one of Embodiments 1-3. In this embodiment, the temperature of the wind turbine generator and the power of the cooling device are smoothly transitioned when the wind turbine generator shifts from a full-load state to a part-load state.

Specifically, in step 102, the wind turbine generator is in a transition state, which is a state from a full-load state to a continuous part-load state, for example, the output power of the wind turbine generator is less than the rated power of the wind turbine generator for a certain period that is less than a preset period. When the wind turbine generator is in this transition state, the first reference temperature is equal to a sum of a first preset temperature and a preset buffer temperature, and the second reference temperature is equal to a sum of a second preset temperature and the preset buffer temperature.

The preset buffer temperature has a positive value, which generally can be set below 10°C, for example, 5°C.

When the wind turbine generator is in the continuous part-load state, in which for example the output power of the wind turbine generator is less than the rated power of the wind turbine generator for a period that is longer than a preset period, the first reference temperature can be set to be equal to the first preset temperature, and the second reference temperature can be set to be equal to the second preset temperature.

Specifically, the output power of the wind turbine generator within a period before the current time can be calculated. In a case that, within such period, the output power reaches the rated power of the wind turbine generator for more than a preset number of times, it means that the wind turbine generator is still in the transition state, otherwise the wind turbine generator is in the continuous part-load state. For example, within previous 10 control cycles, if there are more than 5 times that the output power of the wind turbine generator reaches the rated power, it means that the wind turbine generator is still in the transition state.

FIG. 4 illustrates a specific implementation of the present embodiment. In step 102, in a case that the output power of the wind turbine generator is less than the rated power of the wind turbine generator, the following steps can be performed.

Step 201: determining whether the output power of the wind turbine generator reaches the rated power of the wind turbine generator for a number of times that exceeds a preset value within a previous period of time, if yes, executing step 202, and if no, executing step 1024 as shown in FIG. 2.

Step 202: obtaining the current temperature of the wind turbine generator, if the current temperature is greater than or equal to a first reference temperature, executing step 203; if the current temperature is greater than or equal to a second reference temperature and less than the first reference temperature, executing step 204; and if the current temperature is less than the second reference temperature, executing step 205.

Step 203: controlling the cooling device to be fully operated, and executing step 101.

Step 204: controlling the cooling device to be partially operated, and executing step 101.

Step 205: controlling the cooling device to be closed, and executing step 101.

In this embodiment, the temperature of the turbine as well as the power of the cooling device can be transitioned smoothly, when the wind turbine generator shifts from the full-load state to the continuous part-load state.

### Embodiment 5

This embodiment provides a cooling control method of a wind turbine generator, which is further improvement to any one of the Embodiments 1-4.

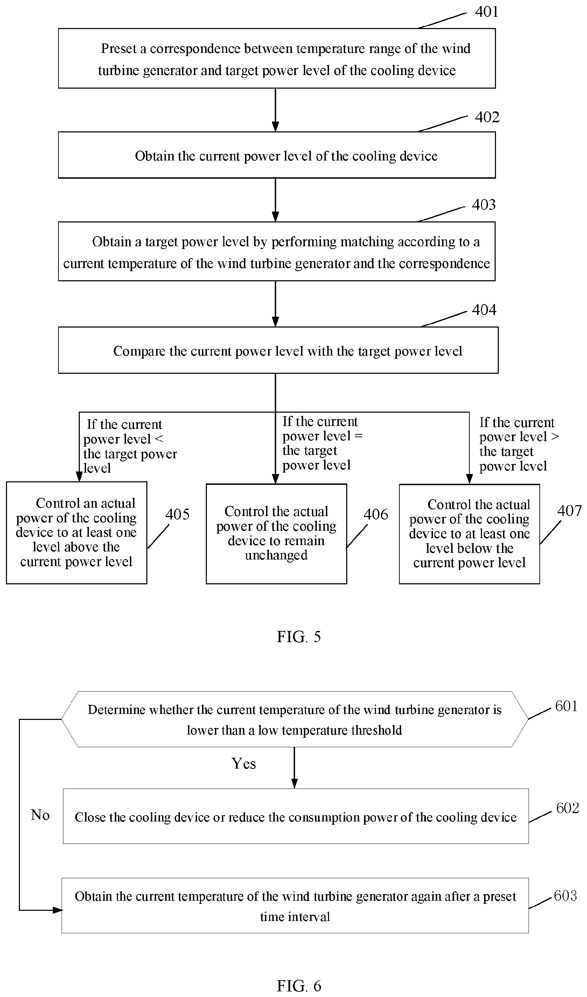

Specifically, as shown in FIG. 5, step 102 further includes the following.

Step 401: presetting a correspondence between temperature range of the wind turbine generator and target power level of the cooling device.

Step 402: obtaining a current power level of the cooling device.

Step 403: obtaining a target power level of the cooling device by performing matching according to the current temperature of the wind turbine generator and the correspondence.

Step 404: comparing the current power level with the target power level, and executing step 405 if the current power level is lower than the target power level; executing step 406 if the current power level is equal to the target power level; and executing step 407 if the current power level is higher than the target power level.

Step 405: controlling the consumption power of the cooling device to at least one level higher than the current power level, and executing step 101.

Step 406: controlling the consumption power of the cooling device to remain unchanged, and executing step 101.

Step 407: controlling the consumption power of the cooling device to at least one level lower than the current power level, and executing step 101.

To easily understand steps 401-407, a specific example is presented in the following to illustrate how to preset the correspondence: it is feasible to preset as follows: when the current temperature is greater than a first preset temperature, the cooling power is to fully run the cooling device and the corresponding target power level is Level 1; when the current temperature is greater than a second preset temperature but less than the first preset temperature, the cooling power is to half-run the cooling device and the corresponding target power level is Level 2; and when the current temperature is less than the second preset temperature, the cooling power is to close the cooling device and the corresponding target power level is Level 3.

In step 402, in a case that the currently obtained power level of the cooling device is Level 1, and in step 403, in a case that the current temperature of the wind turbine generator is greater than the second preset temperature but less than the first preset temperature, it can be seen from the correspondence preset in step 401 that the current target power level is Level 2. According to step 404, it can be known that the target power level (Level 2) is greater than the current power level (Level 1), so step 405 is subsequently executed to control the consumption power of the cooling device to at least one level higher than Level 1, for example, to adjust the current power level from Level 1 to Level 2.

In steps 405 and 407, the consumption power of the cooling device can be specifically adjusted by a few levels up or down from the current power level according to practical needs. For example, in a case that the current power level is lower than the target power level, the current power level may be adjusted up by one level or several levels.

Optionally, the number of levels that can be adjusted up or down in steps 405 and 407 is a fixed value.

Optionally, the number of level(s) that can be adjusted up or down in steps 405 and 407 is one level.

In one example, a prerequisite for performing steps 401 to 407 is that the wind turbine generator is in a continuous part-load state, so as to save the cooling power consumption of the wind turbine generator in the continuous part-load state.

In this embodiment, to guarantee the cooling efficiency of the cooling device, the cooling control method may further include a step of controlling the consumption power of the cooling device to at least one level above the current power level, if the consumption power of the cooling device does not reach the rated consumption power of the cooling device.

In this embodiment, the cooling device power is adjusted gradually by comparing the current power level with the target power level of the cooling device, so as to avoid a stepped change of the cooling device when adjusting its cooling power, and the stability and robustness of cooling control are thus enhanced.

### Embodiment 6

This embodiment provides a cooling control method of a wind turbine generator, which is further improvement to any one of Embodiments 1 to 5. As shown in FIG. 6, when the current temperature of the wind turbine generator is obtained, the method further includes the following steps.

Step 601: determining whether the current temperature of the wind turbine generator is lower than a low temperature threshold, if the current temperature of the wind turbine generator is lower than the low temperature threshold, executing step 602, and if the current temperature of the wind turbine generator is higher than or equal to the low temperature threshold, executing step 603.

Step 602: closing the cooling device or reducing the consumption power of the cooling device.

Step 603: obtaining the current temperature of the wind turbine generator again after a preset time interval.

In the above-mentioned embodiments, to make the actually measured temperature close to a real temperature of the wind turbine generator, one or more measurement points for the current temperature can be chosen through the following steps: obtaining a ventilation type of the wind turbine generator, and setting a measurement point for the current temperature of the wind turbine generator according to the ventilation type.

The measurement point(s) is to be located at or as close as possible to a temperature hotspot. For example, when double-sided radial ventilation is adopted, in which cooling air enters from both ends of airgaps on both sides and leaves from a radial airduct, for a winding with relatively long ends and a complex structure (e.g., a distributed winding), it is preferred to arrange the measurement point at an end of the winding. For a winding with relatively short ends (e.g., a centralized winding), it is preferred to arrange the measurement point in the middle of an axial direction of the winding. For another example, when single-sided radial ventilation is used, namely cooling air flows from one end of an airgap and leaves from the other end of the airgap and a radial airduct, it is preferred to arrange the measurement point at an end of a downstream winding.

Optionally, other components can be selected for the measurement point, for example, a permanent magnet. For double-sided radial ventilation, in one example, the measurement point is arranged on a magnetic pole located in the middle along the axial direction, while for single-sided radial ventilation, in one example, the measurement point is arranged on a downstream magnetic pole. The specific position of the measurement point may be arranged on the surface of the permanent magnet, or even on the permanent magnet within a magnet module protection case.

In order to reduce the error of the actual measured temperature, optionally in the present embodiment, the temperature of the wind turbine generator currently obtained is equal to a sum of the currently-measured actual temperature and a preset temperature compensation value. By setting the preset temperature compensation value, the current temperature is allowed to be closer to a real highest temperature at an interface between copper wire and an inner side of insulation.

In order to increase the safety of the wind turbine generator, optionally, in all embodiments of the present disclosure, a hysteresis control manner can be used to control the adjustment to the cooling device. For example, in step 10232, it is possible to set a first hysteresis control temperature for the first reference temperature, and set a second hysteresis control temperature for the second reference temperature. It should be understood that the setting of hysteresis control temperatures for two-stage reference temperatures is only used as an example. In practice, a corresponding hysteresis control temperature can be provided for each reference temperature in a set number of reference temperatures.

In one example, the hysteresis control temperatures can be set in the following manner.

If there are first and second reference temperatures, values of the first hysteresis control temperature and the second hysteresis control temperature can be set as greater than 0 and less than a product of a preset temperature coefficient and a difference of the first reference temperature and the second reference temperature.

If there are several reference temperatures such as third, fourth and fifth reference temperatures, a third hysteresis control temperature corresponding to the third reference temperature may be set as greater than 0 and less than a product of the preset temperature coefficient and a difference of the second reference temperature and the third reference temperature. Similarly, a fourth hysteresis control temperature corresponding to the fourth reference temperature may be set as greater than 0 and less than a product of the preset temperature coefficient and a difference of the third reference temperature and the fourth reference temperature. And then, a hysteresis control temperature corresponding to each subsequent reference temperature may be set as greater than 0 and less than a product of the preset temperature coefficient and a difference of the current reference temperature and a previous reference temperature.

The smaller the preset temperature coefficient is, the more accurate the temperature adjustment of the cooling device will be, and the larger the preset temperature coefficient becomes, the less the temperature adjustment oscillation to the cooling device and the more the adjustment stability will be. The efficiency and the stability of temperature adjustment for the cooling device can be balanced by setting the preset temperature coefficient.

In one example, when it is necessary to adjust the cooling device, further determination is made as to the rise and fall trend of the current temperature, for example, comparing the current temperature with the temperature at a previous moment. The cooling device may be adjusted accordingly when the current temperature drops and is less than a difference between a certain reference temperature and a corresponding hysteresis control temperature. While the current temperature rises and becomes higher than a certain reference temperature, the cooling device may be adjusted accordingly, so as to ensure that the wind turbine generator is cooled when its temperature rises and oscillation at an adjacent boundary is reduced or avoided when the temperature drops.

In this embodiment, the hysteresis control effectively prevents the cooling device from being adjusted too frequently, thereby avoiding the temperature of the wind turbine generator from oscillating and changing near an adjacent boundary of a reference temperature, so that the robustness of the cooling device regulation is enhanced.

It should be understood that in all embodiments of the present disclosure, it is not limited to acquiring the current temperature of the wind turbine generator in step 102. For example, the current temperature of the wind turbine generator can be obtained before step 102, or the current temperature of the wind turbine generator can be obtained after step 102. It can be determined according practical needs as to in which step the current temperature of the wind turbine generator is obtained.

Alternatively, the cooling control method in the present embodiment may further include a step of determining whether the current temperature of the wind turbine generator is greater than a preset alarm temperature, and if the current temperature of the wind turbine generator is greater than the preset alarm temperature, sending an alarm signal and setting the cooling device to be fully operated, and if the current temperature of the wind turbine generator is lower than or equal to the preset alarm temperature, executing step 1024. It should be understood that the hysteresis control manner can also be used to set the preset alarm temperature, so as to increase control stability.

In this embodiment, by setting the low temperature threshold, it is possible to avoid adverse effects on other structures due to over low temperature of the wind turbine generator. The adverse effects include, for example, reducing the lifetime of bearings due to the over low temperature as well as increasing resistance due to sticky lubricating oil as a result of the low temperature.

In this embodiment, by selecting an appropriate temperature measurement point to ensure that the measured temperature is representative, and by further providing a temperature compensation value for a temperature difference between the temperature measurement point and the actual most concerned point (e.g., the point having the highest temperature), the reliability of temperature measurement and control can be improved.

### Embodiment 7

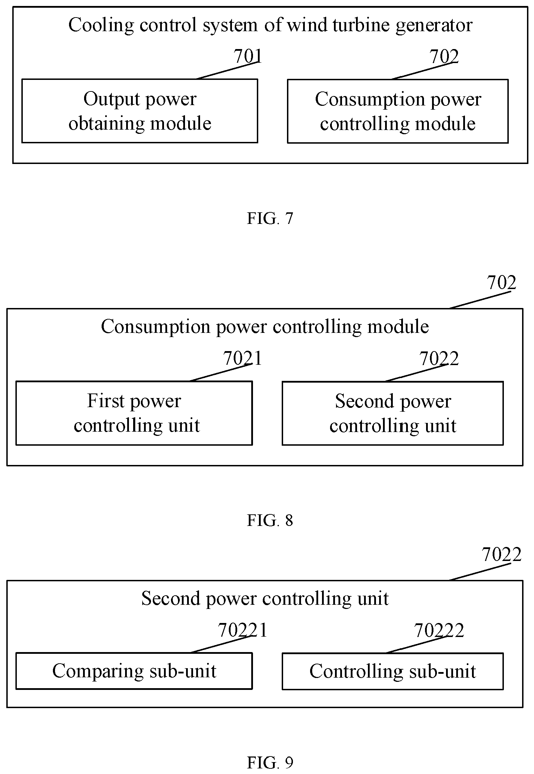

This embodiment provides a cooling control system of a wind turbine generator, where a cooling device at least partially uses electrical energy output by the wind turbine generator to cool the same. As shown in FIG. 7, the cooling control system includes an output power obtaining module 701 and a consumption power controlling module 702.

The output power obtaining module 701 is configured to obtain an output power of the wind turbine generator, and call the consumption power controlling module 702.

The consumption power controlling module 702 is configured to control a consumption power of the cooling device according to the output power of the wind turbine generator and a rated power of the wind turbine generator.

A position of the cooling device can be set according to actual needs. Specifically, the cooling device may be entirely placed inside the wind turbine generator; the cooling device may be entirely placed outside the wind turbine generator; or a part of the cooling device may be placed inside the wind turbine generator, while the other part thereof may be placed outside the wind turbine generator. For instance, a heat dissipator is placed outside a wind power generator while other components are placed inside the generator.

In this embodiment, with the output power obtaining module and the consumption power controlling module, it is possible to regulate the consumption power of the cooling device depending on the output power of the wind turbine generator, which can maximize the utilization of wind energy, and improve the comprehensive performance of the turbine regarding electromagnetic properties and heat dissipation as well as improve the reliability and durability of critical components in the turbine that are affected by the temperature.

### Embodiment 8

This embodiment provides a cooling control system of a wind turbine generator, which is further improvement to Embodiment 7. As shown in FIG. 8, the consumption power controlling module 702 may include a first power controlling unit 7021, which is configured to determine whether the output power of the wind turbine generator is greater than or equal to the rated power of the wind turbine generator. When the output power of the wind turbine generator is greater than or equal to the rated power of the wind turbine generator, whether the consumption power of the cooling device is less than the rated power of the cooling device is determined. If yes, the consumption power of the cooling device is increased; and if no, the consumption power of the cooling device is controlled to remain unchanged. When the output power of the wind turbine generator is less than the rated power of the wind turbine generator, the cooling power of the cooling device is adjusted according to the current temperature of the wind turbine generator.

The first power controlling unit 7021 is further used to call the consumption power controlling module 702 every once for a while to realize the cyclic control for the cooling device.

In the present embodiment, the first power controlling unit in the cooling control system can gradually increase the consumption power of the cooling device, when the output power of the wind turbine generator reaches its rated power while the consumption power of the cooling device does not reach the rated power thereof. As such, in a case where the turbine operates at the rated output power, the cooling power can be increased as much as possible, so that temperatures of the turbine's critical components (e.g., a winding, a permanent magnet) can be further reduced. Therefore, it is possible to improve the reliability and durability of these critical components, and meanwhile to reduce the loss and improve the efficiency of the turbine.

### Embodiment 9

This embodiment provides a cooling control system of a wind turbine generator, which is further improvement to Embodiment 7 or 8. Specifically, as shown in FIG. 8, the consumption power controlling module 702 may further include a second power controlling unit 7022, which is used for controlling the consumption power of the cooling device according to a current temperature of the wind turbine generator and one or more reference temperatures, when the output power of the wind turbine generator is less than the rated power of the wind turbine generator.

Specifically, the second power controlling unit 7022 can adjust the cooling device by setting a plurality of reference temperatures. As shown in FIG. 9, the second power controlling unit 7022 may include a comparing sub-unit 70221 and a controlling sub-unit 70222. The comparing sub-unit 70221 is configured to compare the current temperature with the reference temperatures, where the reference temperatures may include a first reference temperature and a second reference temperature.

The controlling sub-unit 70222 is configured to control the cooling device to be fully operated in a case that the current temperature is greater than or equal to the first reference temperature; and/or to control the cooling device to be half operated in a case that the current temperature is greater than or equal to the second reference temperature and less than the first reference temperature; and/or to control the cooling device to be closed in a case that the current temperature is less than the second reference temperature.

It should be understood that the above-mentioned way of setting three-stage reference temperatures by the second power control unit 7022 is an example. In practice, different numbers of reference temperatures can be set according to specific needs. For example, it is possible to set ten-stage reference temperatures, and the cooling device can be set to operate at an one-tenth rate or the power of the cooling device can be adjusted up to a certain preset power value, when the current temperature reaches a reference temperature set for a first stage.

### Embodiment 10

This embodiment provides a cooling control system of a wind turbine generator, which is of further improvement to any one of the Embodiments 7-9. In this embodiment, it is possible to make the temperature of the turbine and the power of the cooling device smoothly transitioned when the wind turbine generator transits from a full-load state to a part-load state.

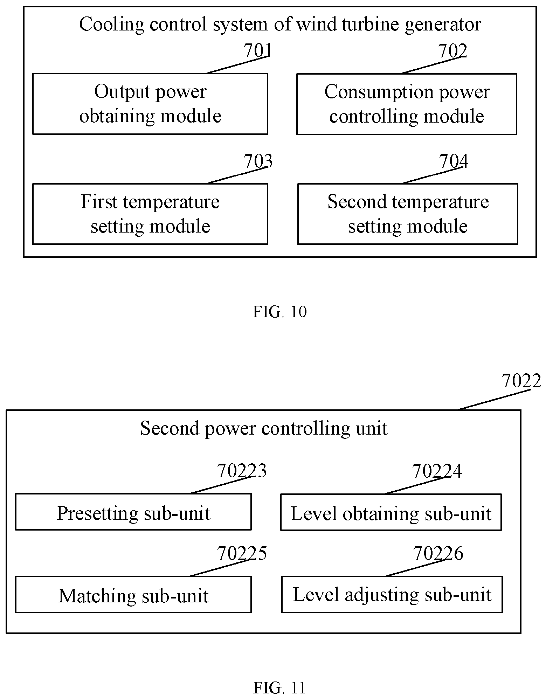

Specifically, as shown in FIG. 10, the cooling control system may further include a first temperature setting module 703, which can be used for setting the first reference temperature to be equal to a sum of a first preset temperature and a preset buffer temperature, and setting the second reference temperature to be equal to a sum of a second preset temperature and the preset buffer temperature, when the wind turbine generator is in a transition state from the full-load state to a continuous part-load state.

The preset buffer temperature has a positive value, and generally the buffer temperature may be set below 10°C, for example, 5°C.

In one example, as shown in FIG. 10, the cooling control system of the wind turbine generator may further include a second temperature setting module 704, which is used for setting the first reference temperature to be equal to the first preset temperature and setting the second reference temperature to be equal to the second preset temperature, when the wind turbine generator is in the continuous part-load state. The wind turbine generator being in the continuous part-load state can be indicated as, for example, the output power of the wind turbine generator is less than the rated power of the wind turbine generator for a time period longer than a preset time period.

Specifically, the output power of the wind turbine generator in a period before the current time can be counted. In a case that, within such period, the number of times that the output power reaches the rated power of the wind turbine generator exceeds a preset value, it can be determined that the wind turbine generator is still in the transition state, otherwise the wind turbine generator is in a part-load state. For example, if the output power reaches the rated power for 5 times or more within 10 previous control cycles, then it can be determined that the wind turbine generator is still in the transition state.

Specifically, the consumption power controlling module 702 may be used to determine whether the output power of the wind turbine generator reaches the rated power of the wind turbine generator for a number of times that exceeds a preset value within a previous period of time. If yes, the current temperature of the wind turbine generator can be obtained. In a case that the current temperature is greater than or equal to the first reference temperature, the cooling device can be controlled to be fully operated; in a case that the current temperature is greater than or equal to the second reference temperature and less than the first reference temperature, the cooling device can be controlled to be half operated; and in a case that the current temperature is less than the second reference temperature, the cooling device can be controlled to be closed. In a case of determining that the number of times, that the output power of the wind turbine generator reaches the rated power of the wind turbine generator within the previous period of time, does not exceed the preset value, the cooling power of the cooling device can be adjusted according to the current temperature of the wind turbine generator.

In the present embodiment, by means of the first temperature setting module and the second temperature setting module, when the wind turbine generator shifts from the full-load state to the continuous part-load state, the temperature of the turbine and the cooling power of the cooling device can be smoothly transitioned.

### Embodiment 11

This embodiment provides a cooling control system of a wind turbine generator, which further improves any one of Embodiments 7-10. Specifically, as shown in FIG. 11, the second power controlling unit 7022 may further include a presetting sub-unit 70223, a level obtaining sub-unit 70224, a matching sub-unit 70225, and a level adjusting sub-unit 70226.

The presetting sub-unit 70223 is configured to preset a correspondence between temperature range of the wind turbine generator and target power level of the cooling device, where target power levels are in a one-to-one correspondence to preset powers of the cooling device.

The level obtaining sub-unit 70224 is configured to obtain a current power level of the cooling device.

The matching sub-unit 70225 is configured to obtain a target power level of the cooling device by performing matching according to the current temperature of the wind turbine generator and the correspondence.

The level adjustment sub-unit 70226 is configured to compare the current power level with the target power level, and in a case that the current power level is lower than the target power level, control the consumption power of the cooling device to at least one level higher than the current power level; in a case that the current power level is equal to the target power level, control the consumption power of the cooling device to remain unchanged; and in a case that the current power level is higher than the target power level, control the consumption power of the cooling device to at least one level lower than the current power level.

In order to facilitate understanding the second power controlling unit 7022, a specific example is presented in the following to illustrate how to preset the correspondence. The presetting sub-unit 70223 can preset that when the current temperature is greater than a first preset temperature, the cooling power is to fully open the cooling device and the corresponding target power level is Level 1; when the current temperature is greater than a second preset temperature and less than the first preset temperature, the cooling power is to half-open the cooling device and the corresponding target power level is Level 2; and when the current temperature is less than the second preset temperature, the cooling power is to close the cooling device and the corresponding target power level is Level 3.

In a case that the current power level of the cooling device obtained by the level obtaining sub-unit 70224 is Level 1, and the current temperature of the wind turbine generator is greater than the second preset temperature and less than the first preset temperature, the matching sub-unit 70225 can know according to the correspondence preset by the presetting sub-unit 70223 that the current target power level is Level 2. By comparison, the level adjusting sub-unit 70226 can know that the target power level (Level 2) is greater than the current power level (Level 1), so that the consumption power of the cooling device can be controlled to at least one level higher than Level 1, for example, the current power level is adjusted from Level 1 to Level 2.

With the level adjusting sub-unit 70226, the consumption power of the cooling device can be specifically adjusted by a few levels up or down from the current power level according to practical needs. For example, in a case that the current power level is less than the target power level, the current power level may be adjusted up by one level or several levels.

Optionally, the level adjusting sub-unit 70226 is further used to control the number of levels to be adjusted for the cooling device as a fixed value.

Optionally, the level adjusting sub-unit 70226 is further used to control the number of levels to be adjusted for the cooling device as one.

In this embodiment, in order to guarantee the cooling efficiency of the cooling device, the level adjusting sub-unit 70226 can be further used to control the consumption power of the cooling device to at least one level above the current power level, in response to determining that the cooling device's consumption power does not reach the rated power of the cooling device.

In this embodiment, the second power controlling unit adjusts gradually the power of the cooling device by comparing the current power level with the target power level of the cooling device, so as to avoid a stepped change of the cooling device during cooling power adjustment. As such, the stability and robustness of the cooling control can be enhanced, and the cooling power consumption of the wind turbine generator in the continuous part-load state can be saved.

### Embodiment 12

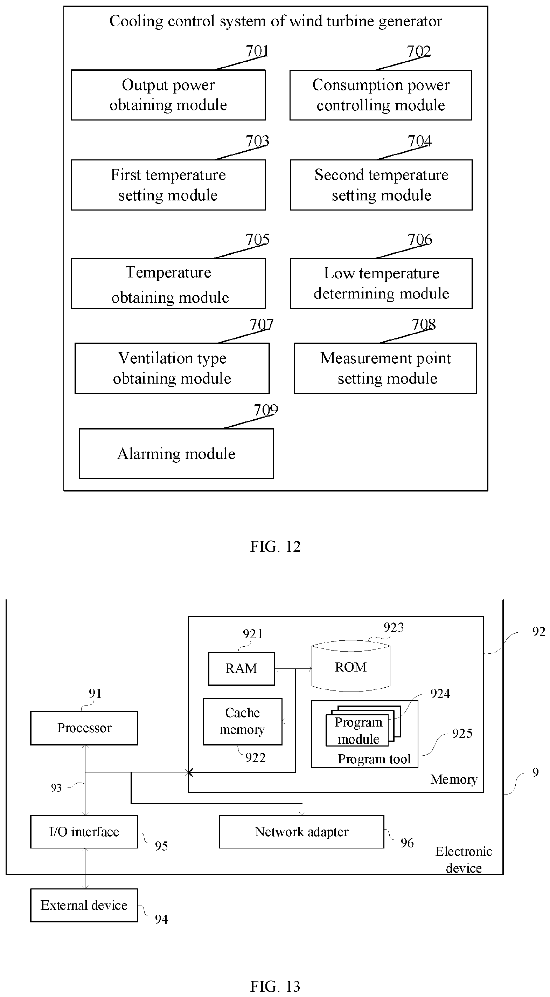

This embodiment provides a cooling control system of a wind turbine generator, which further improves any one of Embodiments 7-11. As shown in FIG. 12, the cooling control system may further include a temperature obtaining module 705 and a low temperature determining module 706.

The temperature obtaining module 705 is configured to obtain the current temperature of the wind turbine generator.

The low temperature determining module 706 is configured to determine whether the current temperature is below a low temperature threshold. If yes, the cooling device is closed or the consumption power of the cooling device is reduced, and if no, the temperature obtaining module 705 is called again after a preset period of time.

In the above embodiments, in order to make an actually measured temperature close to a real temperature of the wind turbine generator, as shown in FIG. 12, the cooling control system may further include a ventilation type obtaining module 707 and a measurement point setting module 708.

The ventilation type obtaining module 707 is used to obtain a ventilation type of the wind turbine generator.

The measurement point setting module 708 is used to set a measurement point for the current temperature of the wind turbine generator according to the ventilation type.

The measurement point(s) set by the measurement point setting module 708 is located at or as close as possible to a temperature hotspot. For example, when double-sided radial ventilation is adopted, in which cooling air enters from both ends of airgaps on both sides and leaves from a radial airduct, for a winding with relatively long ends and a complex structure (e.g., a distributed winding), it is preferred to arrange the measurement point at an end of the winding. For a winding with relatively short ends (e.g., a centralized winding), it is preferred to arrange the measurement point in the middle of an axial direction of the winding. For another example, when single-sided radial ventilation is used, namely cooling air flows from one end of an airgap and leaves from the other end of the airgap and a radial airduct, it is preferred to arrange the measurement point at an end of a downstream winding.

Optionally, the measurement point setting module 708 may also select another component for the measurement point, for example, a permanent magnet. For double-sided radial ventilation, in one example, the measurement point is arranged on a magnetic pole located in the middle along the axial direction, while for single-sided radial ventilation, in one example, the measurement point is arranged on a downstream magnetic pole. The specific position of the measurement point may be arranged on the surface of the permanent magnet, or even on the permanent magnet within a magnet module protection case.

In order to reduce the error of the actual measured temperature, optionally in the present embodiment, the temperature of the wind turbine generator currently obtained is equal to a sum of the currently-detected actual temperature and a preset temperature compensation value. By setting the preset temperature compensation value, the current temperature is allowed to be closer to a real highest temperature at an interface between copper wire and an inner side of insulation.

In order to increase the safety of the wind turbine generator, optionally, in all embodiments of the present disclosure, a hysteresis control manner can be used to control the adjustment to the cooling device. For example, a first hysteresis control temperature may be set for the first reference temperature, and a second hysteresis control temperature may be set for the second reference temperature. When the current temperature is greater than or equal to the second reference temperature and less than a difference between the first reference temperature and the first hysteresis control temperature, the cooling device can be controlled to be half-operated; and when the current temperature is less than a difference between the second reference temperature and the second hysteresis control temperature, the cooling device can be controlled to be closed. It should be understood that the setting of hysteresis control temperatures for two-stage reference temperatures is only used as an example. In practice, a corresponding hysteresis control temperature can be set for each of a set number of reference temperatures.

In one example, the hysteresis control temperatures can be set in the following manner.

If there are first and second reference temperatures, values of the first hysteresis control temperature and the second hysteresis control temperature can be set as greater than 0 and less than a product of a preset temperature coefficient with a difference between the first reference temperature and the second reference temperature.

If there are several reference temperatures such as third, fourth and fifth reference temperatures, a third hysteresis control temperature corresponding to the third reference temperature may be set as greater than 0 and less than a product of the preset temperature coefficient with a difference between the second reference temperature and the third reference temperature. Similarly, a fourth hysteresis control temperature corresponding to the fourth reference temperature may be set as greater than 0 and less than a product of the preset temperature coefficient with a difference between the third reference temperature and the fourth reference temperature. And then, a hysteresis control temperature corresponding to each subsequent reference temperature may be set as greater than 0 and less than a product of the preset temperature coefficient with a difference between the current reference temperature and a previous reference temperature.

The smaller the preset temperature coefficient is, the more accurate the temperature adjustment to the cooling device will be, and the larger the preset temperature coefficient becomes, the less the oscillation of temperature adjustment to the cooling device and the more the adjustment stability will be. The efficiency and the stability of temperature adjustment for the cooling device can be balanced by setting the preset temperature coefficient.

In one example, when it is necessary to adjust the cooling device, further determination is made as to the rise and fall trend of the current temperature, for example, comparing the current temperature with the temperature at a previous moment. The cooling device may be adjusted accordingly when the current temperature drops and is less than a difference between a certain reference temperature and a corresponding hysteresis control temperature. While the current temperature rises and becomes higher than a certain reference temperature, the cooling device may be adjusted accordingly, thereby ensuring that the wind turbine generator is cooled when its temperature rises and oscillation at an adjacent boundary is reduced or avoided when the temperature drops.

In this embodiment, the hysteresis control effectively prevents the cooling device from being adjusted too frequently, thereby avoiding the temperature of the wind turbine generator from oscillating and changing near an adjacent boundary of a reference temperature, so that the robustness of the cooling device regulation is enhanced.

Optionally, as shown in FIG. 12, the cooling control system of this embodiment may further include an alarming module 709, which is configured to determine whether the current temperature of the wind turbine generator is greater than a preset alarm temperature, if yes, send an alarm signal and set the cooling device to be fully run, and if no, adjust the cooling power of the cooling device according to the current temperature of the wind turbine generator.

In this embodiment, by setting the low temperature threshold with the low temperature determining module, it is possible to avoid adverse effects on other structures due to over low temperature of the wind turbine generator. The adverse effects include, for example, reduction in duration of bearings due to the over low temperature as well as increase in resistance due to the lubricating oil becoming sticky as a result of the low temperature.

In this embodiment, by selecting an appropriate temperature measurement point with the measurement point setting module, it can be ensured that the measured temperature is representative. Further, by setting a temperature compensation value, a temperature difference between the temperature measurement point and the actual point of most concern (e. g., the highest temperature point) can be taken into account, thereby improving the reliability of temperature measurement and control.

In this embodiment, frequent changes of temperature caused by temperature oscillation at the adjacent boundary can be prevented though the hysteresis control manner, making the temperature adjustment to the cooling device more stable.

In this embodiment, when the temperature of the wind turbine generator changes, the temperature change can be corresponded in time, so as to adjust the power of the cooling device, and further increase the adjustment efficiency of the cooling device.

### Embodiment 13

This embodiment provides an electronic device that may be represented in a form of a computing device (e.g., the electronic device can be a server device). The electronic device includes a memory, a processor, and a computer program which is stored in the memory and is runnable on the processor. The cooling control method of the wind turbine generator as described in any one of Embodiments 1-6 can be implemented when the processor executes the computer program.

FIG. 13 illustrates a structural schematic diagram of the present embodiment. As shown in FIG. 13, the electronic device 9 specifically includes the following.

At least one processor 91, at least one memory 92, and a bus 93 for connecting different system components (including the processor 91 and the memory 92).

The bus 93 includes a data bus, an address bus, and a control bus.

The memory 92 includes a volatile memory, such as Random Access Memory (RAM) 921 and/or Cache Memory 922, and may further include Read-Only Memory (ROM) 923.

The memory 92 also includes a program/utility tool 925 having a set of (at least one) program modules 924, which include, but are not limited to, an operating system, one or more applications, other program modules, and program data. Each of these examples or a certain combination thereof may include the realization of a network environment.

By running the computer program stored in the memory 92, the processor 91 performs various functional applications as well as data processing, for example, the cooling control method of a wind turbine generator described according to any one of Embodiments 1-6 of the present disclosure.

The electronic device 9 may further communicate with one or more external devices 94 (e.g., a keyboard, a pointing device, etc.). This communication may be performed through an input/output (I/O) interface 95. Moreover, the electronic device 9 may also communicate with one or more networks (e. g., a local area network (LAN), a wide area network (WAN), and/or a public network, such as the Internet) through a network adapter 96. The network adapter 96 communicates with other modules of the electronic device 9 through the bus 93. It should be appreciated that, although not shown in the figure, other hardware and/or software modules may be used in combination with the electronic device 9, including but not limited to, micro-codes, device drivers, redundant processors, external disk drive arrays, Redundant Arrays of Independent Disk (RAID) systems, tape drives, data backup storage systems, and the like.

It should be noted that although several units/modules or sub-units/modules of the electronic device are mentioned in the above detailed description, this division is merely exemplary and not mandatory. In fact, according to the embodiments of the present application, features and functions of two or more units/modules described above may be embodied in one unit/module. Conversely, features and functions of a unit/module described above can be further divided and embodied by a plurality of units/modules.

### Embodiment 14

The present embodiment provides a computer-readable storage medium on which a computer program is stored. When a processor executes the computer program, steps of the cooling control method of the wind turbine generator as described in any one of Embodiments 1-6 are implemented.

The readable storage medium may more specifically include, but is not limited to, a portable disk, a hard disk, a random access memory, a read-only memory, an erasable programmable read-only memory, an optical storage device, a magnetic memory device, or any appropriate combination of the above.

In a possible embodiment, the present disclosure may be implemented in a form of a program product as well, which includes program codes. When the computer program is running on a terminal device, the program codes are used to make the terminal device perform steps of the cooling control method of the wind turbine generator as described in any one of Embodiments 1-6.

The program codes used for executing the present disclosure may be written in any combination of one or more programming languages, and the program codes can be executed entirely on a user device, partially on a user device, as a separate software package, partially on a user device and partially on a remote device, or entirely on the remote device.

Although specific embodiments of the invention are described above, those skilled in the art should understand that this is an example, and the protection scope of the present disclosure is defined by the appended claims.

## Claims

1. A cooling control method of a wind turbine generator, a cooling device at least partially using electric energy output from the wind turbine generator to cool the wind turbine generator, the cooling control method comprises steps of:
S1, obtaining (101) an output power of the wind turbine generator; and
S2, controlling (102) a consumption power of the cooling device according to the output power of the wind turbine generator and a rated power of the wind turbine generator;
**characterized in that** the step S2 further comprises: step S21,
determining (1023) whether the consumption power of the cooling device is less than a rated power of the cooling device, when the output power of the wind turbine generator is greater than or equal to the rated power of the wind turbine generator; if the consumption power of the cooling device is less than the rated power of the cooling device, increasing (1025) the consumption power of the cooling device; and if the consumption power of the cooling device is larger than or equal to the rated power of the cooling device, controlling (1026) the consumption power of the cooling device to remain unchanged;
or
wherein the step S2 further comprises: step S22, controlling (10232) the consumption power of the cooling device according to one or more reference temperatures and a current temperature of the wind turbine generator, when the output power of the wind turbine generator is less than the rated power of the wind turbine generator.

2. The cooling control method of the wind turbine generator according to claim 1, wherein the reference temperatures comprise a first reference temperature and a second reference temperature, and the step S22 further comprises:
comparing the current temperature with the reference temperatures;
if the current temperature is greater than or equal to the first reference temperature, controlling (203) the cooling device to be fully run; and/or
if the current temperature is greater than or equal to the second reference temperature and less than the first reference temperature, controlling (204) the cooling device to be half run; and/or
if the current temperature is less than the second reference temperature, controlling (205) the cooling device to be closed.

3. The cooling control method of the wind turbine generator according to claim 2, further comprising:
when the wind turbine generator is in a transition state from a full-load state to a continuous part-load state, setting the first reference temperature to be equal to a sum of a first preset temperature and a preset buffer temperature; and/or setting the second reference temperature to be equal to a sum of a second preset temperature and the preset buffer temperature;
and/or
when the wind turbine generator is already in the continuous part-load state, setting the first reference temperature to be equal to the first preset temperature, and setting the second reference temperature to be equal to the second preset temperature.

4. The cooling control method of the wind turbine generator according to claim 1, wherein the step S22 further comprises:
presetting (401) a correspondence between temperature range of the wind turbine generator and target power level of the cooling device;
obtaining (402) a current power level of the cooling device;
obtaining (403) a target power level of the cooling device by performing matching according to the current temperature of the wind turbine generator and the correspondence;
comparing (404) the current power level with the target power level, and:
controlling (405) the consumption power of the cooling device to at least one level higher than the current power level if the current power level is lower than the target power level;
controlling (406) the consumption power of the cooling device to remain unchanged if the current power level is equal to the target power level; and
controlling (407) the consumption power of the cooling device to at least one level lower than the current power level, if the current power level is higher than the target power level.

5. The cooling control method of the wind turbine generator according to any one of claims 1 to 4, further comprising:
obtaining a current temperature of the wind turbine generator; and
determining (601) whether the current temperature is lower than a low temperature threshold, if the current temperature is lower than the low temperature threshold, closing (602) the cooling device or reducing the consumption power of the cooling device.

6. The cooling control method of the wind turbine generator according to any one of claims 2 to 4, further comprising at least one of:
obtaining a ventilation type of the wind turbine generator; and setting a measurement point for the current temperature of the wind turbine generator according to the ventilation type;
the current temperature is equal to a sum of a currently measured actual temperature and a preset temperature compensation value;
or
determining whether the current temperature of the wind turbine generator is greater than a preset alarm temperature, and if the current temperature of the wind turbine generator is greater than the preset alarm temperature, sending an alarm signal and setting the cooling device to be fully run.

7. A cooling control system of a wind turbine generator, a cooling device at least partially using electric energy output by the wind turbine generator to cool the wind turbine generator, the cooling control system comprises an output power obtaining module (701) and a consumption power controlling module (702);
wherein the output power obtaining module (701) is configured to obtain an output power of the wind turbine generator; and
the consumption power controlling module (702) is configured to control a consumption power of the cooling device according to the output power of the wind turbine generator and a rated power of the wind turbine generator;
**characterized in that** the consumption power controlling module (702) comprises a first power controlling unit (7021) configured to
determine whether the consumption power of the cooling device is less than a rated power of the cooling device, when the output power of the wind turbine generator is greater than or equal to the rated power of the wind turbine generator; if the consumption power of the cooling device is less than the rated power of the cooling device, increase the consumption power of the cooling device; and if the consumption power of the cooling device is larger than or equal to the rated power of the cooling device, control the consumption power of the cooling device to remain unchanged;
or
wherein the consumption power controlling module (702) further comprises a second power controlling unit (7022) configured to control the consumption power of the cooling device according to a current temperature of the wind turbine generator and one or more reference temperatures, when the output power of the wind turbine generator is less than the rated power of the wind turbine generator.

8. The cooling control system of the wind turbine generator according to claim 7, wherein the reference temperatures comprise a first reference temperature and a second reference temperature, and the second power controlling unit (7022) further comprises a comparing sub-unit (70221) and a controlling sub-unit (70222);
wherein the comparing sub-unit (70221) is configured to compare the current temperature with the reference temperatures; and
the controlling sub-unit (70222) is configured to
control the cooling device to be fully operated in a case that the current temperature is greater than or equal to the first reference temperature; and/or
control the cooling device to be half operated in a case that the current temperature is greater than or equal to the second reference temperature and less than the first reference temperature; and/or
control the cooling device to be closed in a case that the current temperature is less than the second reference temperature.

9. The cooling control system of the wind turbine generator according to claim 8, wherein the cooling control system further comprises a first temperature setting module (703), which is configured to set the first reference temperature to be equal to a sum of a first preset temperature and a preset buffer temperature, when the wind turbine generator is in a transition state from a full-load state to a continuous part-load state; and/or the first temperature setting module (703) is further configured to set the second reference temperature to be equal to a sum of a second preset temperature and the preset buffer temperature;
and/or
the cooling control system further comprises a second temperature setting module (704), which is configured to set the first reference temperature to be equal to the first preset temperature and set the second reference temperature to be equal to the second preset temperature, when the wind turbine generator is already in the continuous part-load state.

10. The cooling control system of the wind turbine generator according to claim 9, wherein the second power controlling unit (7022) further comprises a presetting sub-unit (70223), a level obtaining sub-unit (70224), a matching sub-unit (70225), and a level adjusting sub-unit (70226);
the presetting sub-unit (70223) is configured to preset a correspondence between temperature range of the wind turbine generator and target power level of the cooling device, wherein power levels are in a one-to-one correspondence to preset powers of the cooling device;
the level obtaining sub-unit (70224) is configured to obtain a current power level of the cooling device;
the matching sub-unit (70225) is configured to obtain a target power level of the cooling device by performing matching according to the current temperature of the wind turbine generator and the correspondence; and
the level adjusting sub-unit (70226) is configured to compare the current power level with the target power level, and control the consumption power of the cooling device to at least one level higher than the current power level if the current power level is lower than the target power level; control the consumption power of the cooling device to remain unchanged if the current power level is equal to the target power level; and control the consumption power of the cooling device to at least one level lower than the current power level, if the current power level is higher than the target power level.

11. The cooling control system of the wind turbine generator according to any one of claims 8 to 10, wherein the cooling control system further comprises a temperature obtaining module (705) and a low temperature determining module (706);
the temperature obtaining module (705) is configured to obtain a current temperature of the wind turbine generator; and
the low temperature determining module (706) is configured to determine whether the current temperature is lower than a low temperature threshold, and if the current temperature is lower than the low temperature threshold, close the cooling device or reduce the consumption power of the cooling device.

12. An electronic device, comprising a memory, a processor and a computer program stored on the memory and runnable on the processor, wherein the processor executes the computer program to implement a cooling control method of a wind turbine generator according to any one of claims 1 to 6.

13. A computer-readable storage medium having a computer program stored thereon, wherein steps of a cooling control method of a wind turbine generator according to any one of claims 1 to 6 are implemented when the computer program is executed by a processor.

## Patentansprüche

1. Ein Kühlsteuerungsverfahren für einen Windkraftgenerator, wobei ein Kühlvorrichtung mindestens teilweise elektrische Energie verwendet, die vom Windkraftgenerator erzeugt wird, um den Windkraftgenerator zu kühlen, wobei das Kühlsteuerungsverfahren folgende Schritte umfasst:
S1, Erfassen (101) einer Ausgangsleistung des Windkraftgenerators; und
S2, Steuern (102) einer Leistungsaufnahme der Kühlvorrichtung entsprechend der Ausgangsleistung des Windkraftgenerators und einer Nennleistung des Windkraftgenerators;
**dadurch gekennzeichnet, dass** der Schritt S2 weiterhin umfasst: Schritt S21,
Bestimmen (1023), ob die Leistungsaufnahme der Kühlvorrichtung kleiner ist als eine Nennleistung der Kühlvorrichtung, wenn die Ausgangsleistung des Windkraftgenerators größer oder gleich der Nennleistung des Windkraftgenerators ist; wenn die Leistungsaufnahme der Kühlvorrichtung kleiner ist als die Nennleistung der Kühlvorrichtung, Erhöhen (1025) der Leistungsaufnahme der Kühlvorrichtung; und wenn die Leistungsaufnahme der Kühlvorrichtung größer oder gleich der Nennleistung der Kühlvorrichtung ist, Steuern (1026) der Leistungsaufnahme der Kühlvorrichtung so, dass sie unverändert bleibt;
oder
wobei der Schritt S2 weiterhin umfasst: Schritt S22, Steuern (10232) der Leistungsaufnahme der Kühlvorrichtung entsprechend einer oder mehreren Referenztemperaturen und einer aktuellen Temperatur des Windkraftgenerators, wenn die Ausgangsleistung des Windkraftgenerators kleiner ist als die Nennleistung des Windkraftgenerators.

2. Das Kühlsteuerungsverfahren des Windkraftgenerators nach Anspruch 1, wobei die Referenztemperaturen eine erste Referenztemperatur und eine zweite Referenztemperatur umfassen, und der Schritt S22 weiterhin umfasst:
Vergleichen der aktuellen Temperatur mit den Referenztemperaturen;
wenn die aktuelle Temperatur größer oder gleich der ersten Referenztemperatur ist, Steuern (203) der Kühlvorrichtung auf vollständigen Betrieb; und/oder
wenn die aktuelle Temperatur größer oder gleich der zweiten Referenztemperatur und kleiner als die erste Referenztemperatur ist, Steuern (204) der Kühlvorrichtung auf halben Betrieb; und/oder
wenn die aktuelle Temperatur kleiner ist als die zweite Referenztemperatur, Steuern (205) der Kühlvorrichtung zum Abschalten.

3. Das Kühlsteuerungsverfahren des Windkraftgenerators nach Anspruch 2, weiterhin umfassend:
wenn sich der Windkraftgenerator in einem Übergangszustand von einem Volllastzustand zu einem kontinuierlichen Teillastzustand befindet, Festlegen der ersten Referenztemperatur gleich der Summe aus einer ersten voreingestellten Temperatur und einer voreingestellten Puffertemperatur; und/oder Festlegen der zweiten Referenztemperatur gleich der Summe aus einer zweiten voreingestellten Temperatur und der voreingestellten Puffertemperatur;
und/oder
wenn sich der Windkraftgenerator bereits im kontinuierlichen Teillastzustand befindet, Festlegen der ersten Referenztemperatur gleich der ersten voreingestellten Temperatur und Festlegen der zweiten Referenztemperatur gleich der zweiten voreingestellten Temperatur.

4. Das Kühlsteuerungsverfahren des Windkraftgenerators nach Anspruch 1, wobei der Schritt S22 weiterhin umfasst:
Voreinstellen (401) einer Zuordnung zwischen einem Temperaturbereich des Windkraftgenerators und einem Zielleistungsniveau der Kühlvorrichtung;
Erfassen (402) eines aktuellen Leistungsniveaus der Kühlvorrichtung;
Ermitteln (403) eines Zielleistungsniveaus der Kühlvorrichtung durch Abgleichen gemäß der aktuellen Temperatur des Windkraftgenerators und der Zuordnung;
Vergleichen (404) des aktuellen Leistungsniveaus mit dem Zielleistungsniveau, und:
Steuern (405) der Leistungsaufnahme der Kühlvorrichtung auf mindestens ein Niveau höher als das aktuelle Leistungsniveau, wenn das aktuelle Leistungsniveau niedriger ist als das Zielleistungsniveau;
Steuern (406) der Leistungsaufnahme der Kühlvorrichtung, unverändert zu bleiben, wenn das aktuelle Leistungsniveau gleich dem Zielleistungsniveau ist; und
Steuern (407) der Leistungsaufnahme der Kühlvorrichtung auf mindestens ein Niveau niedriger als das aktuelle Leistungsniveau, wenn das aktuelle Leistungsniveau höher ist als das Zielleistungsniveau.

5. Das Kühlsteuerungsverfahren des Windkraftgenerators nach einem der Ansprüche 1 bis 4, weiterhin umfassend:
Erfassen einer aktuellen Temperatur des Windkraftgenerators; und
Bestimmen (601), ob die aktuelle Temperatur niedriger ist als ein niedriger Temperaturschwellenwert, wobei, wenn die aktuelle Temperatur niedriger ist als der niedrige Temperaturschwellenwert, die Kühlvorrichtung abgeschaltet (602) oder die Leistungsaufnahme der Kühlvorrichtung reduziert wird.

6. Das Kühlsteuerungsverfahren des Windkraftgenerators nach einem der Ansprüche 2 bis 4, weiterhin umfassend mindestens eine der folgenden Maßnahmen:
Erfassen eines Belüftungstyps des Windkraftgenerators; und Festlegen eines Messpunkts für die aktuelle Temperatur des Windkraftgenerators gemäß dem Belüftungstyp;
die aktuelle Temperatur ist gleich der Summe aus einer aktuell gemessenen tatsächlichen Temperatur und einem voreingestellten Temperaturkompensationswert;
oder
Bestimmen, ob die aktuelle Temperatur des Windkraftgenerators größer ist als eine voreingestellte Alarmtemperatur, und wenn die aktuelle Temperatur des Windkraftgenerators größer ist als die voreingestellte Alarmtemperatur, Senden eines Alarmsignals und Einstellen der Kühlvorrichtung auf vollständigen Betrieb.

7. Ein Kühlsteuersystem eines Windkraftgenerators, wobei eine Kühlvorrichtung mindestens teilweise elektrische Energie verwendet, die vom Windkraftgenerator erzeugt wird, um den Windkraftgenerator zu kühlen, wobei das Kühlsteuersystem ein Ausgangsleistungs-Erfassungsmodul (701) und ein Leistungsaufnahme-Steuermodul (702) umfasst;
wobei das Ausgangsleistungs-Erfassungsmodul (701) dafür eingerichtet ist, eine Ausgangsleistung des Windkraftgenerators zu erfassen; und
das Leistungsaufnahme-Steuermodul (702) dafür eingerichtet ist, eine Leistungsaufnahme der Kühlvorrichtung entsprechend der Ausgangsleistung des Windkraftgenerators und einer Nennleistung des Windkraftgenerators zu steuern;
**dadurch gekennzeichnet, dass** das Leistungsaufnahme-Steuermodul (702) eine erste Leistungssteuerungseinheit (7021) umfasst, die dafür eingerichtet ist,
zu bestimmen, ob die Leistungsaufnahme der Kühlvorrichtung kleiner ist als eine Nennleistung der Kühlvorrichtung, wenn die Ausgangsleistung des Windkraftgenerators größer oder gleich der Nennleistung des Windkraftgenerators ist; wenn die Leistungsaufnahme der Kühlvorrichtung kleiner ist als die Nennleistung der Kühlvorrichtung, die Leistungsaufnahme der Kühlvorrichtung zu erhöhen; und wenn die Leistungsaufnahme der Kühlvorrichtung größer oder gleich der Nennleistung der Kühlvorrichtung ist, die Leistungsaufnahme der Kühlvorrichtung unverändert zu halten;
oder
wobei das Leistungsaufnahme-Steuermodul (702) weiterhin eine zweite Leistungssteuerungseinheit (7022) umfasst, die dafür eingerichtet ist, die Leistungsaufnahme der Kühlvorrichtung entsprechend einer aktuellen Temperatur des Windkraftgenerators und einer oder mehreren Referenztemperaturen zu steuern, wenn die Ausgangsleistung des Windkraftgenerators kleiner ist als die Nennleistung des Windkraftgenerators.

8. Das Kühlsteuersystem des Windkraftgenerators nach Anspruch 7, wobei die Referenztemperaturen eine erste Referenztemperatur und eine zweite Referenztemperatur umfassen, und die zweite Leistungssteuerungseinheit (7022) weiterhin eine Vergleichs-Teileinheit (70221) und eine Steuer-Teileinheit (70222) umfasst;
wobei die Vergleichs-Teileinheit (70221) dafür eingerichtet ist, die aktuelle Temperatur mit den Referenztemperaturen zu vergleichen; und
die Steuer-Teileinheit (70222) dafür eingerichtet ist,
die Kühlvorrichtung vollständig zu betreiben, wenn die aktuelle Temperatur größer oder gleich der ersten Referenztemperatur ist; und/oder
die Kühlvorrichtung halb zu betreiben, wenn die aktuelle Temperatur größer oder gleich der zweiten Referenztemperatur und kleiner als die erste Referenztemperatur ist; und/oder
die Kühlvorrichtung abzuschalten, wenn die aktuelle Temperatur kleiner ist als die zweite Referenztemperatur.

9. Das Kühlsteuersystem des Windkraftgenerators nach Anspruch 8, wobei das Kühlsteuersystem weiterhin ein erstes Temperatur-Einstellmodul (703) umfasst, das dafür eingerichtet ist, die erste Referenztemperatur gleich der Summe aus einer ersten voreingestellten Temperatur und einer voreingestellten Puffertemperatur festzulegen, wenn sich der Windkraftgenerator in einem Übergangszustand von einem Volllastzustand zu einem kontinuierlichen Teillastzustand befindet; und/oder das erste Temperatur-Einstellmodul (703) ist weiterhin dafür eingerichtet, die zweite Referenztemperatur gleich der Summe aus einer zweiten voreingestellten Temperatur und der voreingestellten Puffertemperatur festzulegen;
und/oder
das Kühlsteuersystem umfasst weiterhin ein zweites Temperatur-Einstellmodul (704), das dafür eingerichtet ist, die erste Referenztemperatur gleich der ersten voreingestellten Temperatur und die zweite Referenztemperatur gleich der zweiten voreingestellten Temperatur festzulegen, wenn sich der Windkraftgenerator bereits im kontinuierlichen Teillastzustand befindet.

10. Das Kühlsteuersystem des Windkraftgenerators nach Anspruch 9, wobei die zweite Leistungssteuerungseinheit (7022) weiterhin eine Voreinstellungs-Teileinheit (70223), eine Pegelerfassungs-Teileinheit (70224), eine Zuordnungs-Teileinheit (70225) und eine Pegelanpassungs-Teileinheit (70226) umfasst;
die Voreinstellungs-Teileinheit (70223) ist dafür eingerichtet, eine Zuordnung zwischen einem Temperaturbereich des Windkraftgenerators und einem Zielleistungsniveau der Kühlvorrichtung voreinzustellen, wobei die Leistungsniveaus eins zu eins den voreingestellten Leistungen der Kühlvorrichtung entsprechen;
die Pegelerfassungs-Teileinheit (70224) ist dafür eingerichtet, ein aktuelles Leistungsniveau der Kühlvorrichtung zu erfassen;
die Zuordnungs-Teileinheit (70225) ist dafür eingerichtet, ein Zielleistungsniveau der Kühlvorrichtung durch Abgleichen gemäß der aktuellen Temperatur des Windkraftgenerators und der Zuordnung zu erhalten; und
die Pegelanpassungs-Teileinheit (70226) ist dafür eingerichtet, das aktuelle Leistungsniveau mit dem Zielleistungsniveau zu vergleichen und die Leistungsaufnahme der Kühlvorrichtung auf mindestens ein Niveau höher als das aktuelle Leistungsniveau zu steuern, wenn das aktuelle Leistungsniveau niedriger ist als das Zielleistungsniveau; die Leistungsaufnahme der Kühlvorrichtung unverändert zu halten, wenn das aktuelle Leistungsniveau gleich dem Zielleistungsniveau ist; und die Leistungsaufnahme der Kühlvorrichtung auf mindestens ein Niveau niedriger als das aktuelle Leistungsniveau zu steuern, wenn das aktuelle Leistungsniveau höher ist als das Zielleistungsniveau.

11. Das Kühlsteuersystem des Windkraftgenerators nach einem der Ansprüche 8 bis 10, wobei das Kühlsteuersystem weiterhin ein Temperatur-Erfassungsmodul (705) und ein Niedertemperatur-Bestimmungsmodul (706) umfasst;
das Temperatur-Erfassungsmodul (705) ist dafür eingerichtet, eine aktuelle Temperatur des Windkraftgenerators zu erfassen; und
das Niedertemperatur-Bestimmungsmodul (706) ist dafür eingerichtet, zu bestimmen, ob die aktuelle Temperatur niedriger ist als ein niedriger Temperaturschwellenwert, und wenn die aktuelle Temperatur niedriger ist als der niedrige Temperaturschwellenwert, die Kühlvorrichtung abzuschalten oder die Leistungsaufnahme der Kühlvorrichtung zu reduzieren.

12. Eine elektronische Vorrichtung, umfassend einen Speicher, einen Prozessor und ein Computersoftwareprogramm, das im Speicher gespeichert und auf dem Prozessor ausführbar ist, wobei der Prozessor das Computersoftwareprogramm ausführt, um ein Kühlsteuerungsverfahren eines Windkraftgenerators gemäß einem der Ansprüche 1 bis 6 auszuführen.

13. Ein computerlesbares Speichermedium, auf dem ein Computersoftwareprogramm gespeichert ist, wobei die Schritte eines Kühlsteuerungsverfahrens eines Windkraftgenerators gemäß einem der Ansprüche 1 bis 6 ausgeführt werden, wenn das Computersoftwareprogramm von einem Prozessor ausgeführt wird.

## Revendications

1. Un procédé de commande de refroidissement d'un générateur d'éolienne, un dispositif de refroidissement utilisant au moins partiellement l'énergie électrique produite par le générateur d'éolienne pour refroidir le générateur d'éolienne, le procédé de commande de refroidissement comprenant les étapes consistant à :
S1, obtenir (101) une puissance de sortie du générateur d'éolienne ; et
S2, commander (102) une puissance de consommation du dispositif de refroidissement selon la puissance de sortie du générateur d'éolienne et une puissance nominale du générateur d'éolienne ;
**caractérisé en ce que** l'étape S2 comprend en outre : l'étape S21,
déterminer (1023) si la puissance de consommation du dispositif de refroidissement est inférieure à une puissance nominale du dispositif de refroidissement, lorsque la puissance de sortie du générateur d'éolienne est supérieure ou égale à la puissance nominale du générateur d'éolienne ; si la puissance de consommation du dispositif de refroidissement est inférieure à la puissance nominale du dispositif de refroidissement, augmenter (1025) la puissance de consommation du dispositif de refroidissement ; et si la puissance de consommation du dispositif de refroidissement est supérieure ou égale à la puissance nominale du dispositif de refroidissement, commander (1026) la puissance de consommation du dispositif de refroidissement à rester inchangée ;
ou
dans lequel l'étape S2 comprend en outre : l'étape S22, commander (10232) la puissance de consommation du dispositif de refroidissement selon une ou plusieurs températures de référence et une température actuelle du générateur d'éolienne, lorsque la puissance de sortie du générateur d'éolienne est inférieure à la puissance nominale du générateur d'éolienne.

2. Le procédé de commande de refroidissement du générateur d'éolienne selon la revendication 1, dans lequel les températures de référence comprennent une première température de référence et une deuxième température de référence, et l'étape S22 comprend en outre :
comparer la température actuelle avec les températures de référence ;
si la température actuelle est supérieure ou égale à la première température de référence, commander (203) le dispositif de refroidissement à fonctionner complètement ; et/ou
si la température actuelle est supérieure ou égale à la deuxième température de référence et inférieure à la première température de référence, commander (204) le dispositif de refroidissement à fonctionner à moitié ; et/ou
si la température actuelle est inférieure à la deuxième température de référence, commander (205) le dispositif de refroidissement à être fermé.

3. Le procédé de commande de refroidissement du générateur d'éolienne selon la revendication 2, comprenant en outre :
lorsque le générateur d'éolienne est dans un état de transition d'un état à pleine charge vers un état continu à charge partielle, définir la première température de référence égale à la somme d'une première température prédéfinie et d'une température tampon prédéfinie ;
et/ou définir la deuxième température de référence égale à la somme d'une deuxième température prédéfinie et de la température tampon prédéfinie ;
et/ou
lorsque le générateur d'éolienne est déjà dans l'état continu à charge partielle, définir la première température de référence égale à la première température prédéfinie et définir la deuxième température de référence égale à la deuxième température prédéfinie.

4. Le procédé de commande de refroidissement du générateur d'éolienne selon la revendication 1, dans lequel l'étape S22 comprend en outre :
prédéfinir (401) une correspondance entre la plage de température du générateur d'éolienne et le niveau de puissance cible du dispositif de refroidissement ;
obtenir (402) un niveau de puissance actuel du dispositif de refroidissement ;
obtenir (403) un niveau de puissance cible du dispositif de refroidissement en effectuant une correspondance selon la température actuelle du générateur d'éolienne et la correspondance ;
comparer (404) le niveau de puissance actuel avec le niveau de puissance cible, et :
commander (405) la puissance de consommation du dispositif de refroidissement à être d'au moins un niveau supérieur au niveau de puissance actuel si le niveau de puissance actuel est inférieur au niveau de puissance cible ;
commander (406) la puissance de consommation du dispositif de refroidissement à rester inchangée si le niveau de puissance actuel est égal au niveau de puissance cible ; et
commander (407) la puissance de consommation du dispositif de refroidissement à être d'au moins un niveau inférieur au niveau de puissance actuel si le niveau de puissance actuel est supérieur au niveau de puissance cible.

5. Le procédé de commande de refroidissement du générateur d'éolienne selon l'une quelconque des revendications 1 à 4, comprenant en outre :
obtenir une température actuelle du générateur d'éolienne ; et
déterminer (601) si la température actuelle est inférieure à un seuil de basse température, si la température actuelle est inférieure au seuil de basse température, fermer (602) le dispositif de refroidissement ou réduire la puissance de consommation du dispositif de refroidissement.

6. Le procédé de commande de refroidissement du générateur d'éolienne selon l'une quelconque des revendications 2 à 4, comprenant en outre au moins l'un des éléments suivants :
obtenir un type de ventilation du générateur d'éolienne ; et définir un point de mesure pour la température actuelle du générateur d'éolienne selon le type de ventilation ;
la température actuelle est égale à la somme d'une température réelle actuellement mesurée et d'une valeur de compensation de température prédéfinie ;
ou
déterminer si la température actuelle du générateur d'éolienne est supérieure à une température d'alarme prédéfinie, et si la température actuelle du générateur d'éolienne est supérieure à la température d'alarme prédéfinie, envoyer un signal d'alarme et définir le dispositif de refroidissement à fonctionner complètement.

7. Un système de commande de refroidissement d'un générateur d'éolienne, un dispositif de refroidissement utilisant au moins partiellement l'énergie électrique produite par le générateur d'éolienne pour refroidir le générateur d'éolienne, le système de commande de refroidissement comprenant un module d'obtention de puissance de sortie (701) et un module de commande de puissance de consommation (702) ;
dans lequel le module d'obtention de puissance de sortie (701) est configuré pour obtenir une puissance de sortie du générateur d'éolienne ; et
le module de commande de puissance de consommation (702) est configuré pour commander une puissance de consommation du dispositif de refroidissement selon la puissance de sortie du générateur d'éolienne et une puissance nominale du générateur d'éolienne ;
**caractérisé en ce que** le module de commande de puissance de consommation (702) comprend une première unité de commande de puissance (7021) configurée pour
déterminer si la puissance de consommation du dispositif de refroidissement est inférieure à une puissance nominale du dispositif de refroidissement, lorsque la puissance de sortie du générateur d'éolienne est supérieure ou égale à la puissance nominale du générateur d'éolienne ; si la puissance de consommation du dispositif de refroidissement est inférieure à la puissance nominale du dispositif de refroidissement, augmenter la puissance de consommation du dispositif de refroidissement ; et si la puissance de consommation du dispositif de refroidissement est supérieure ou égale à la puissance nominale du dispositif de refroidissement, commander la puissance de consommation du dispositif de refroidissement à rester inchangée ;
ou
dans lequel le module de commande de puissance de consommation (702) comprend en outre une deuxième unité de commande de puissance (7022) configurée pour commander la puissance de consommation du dispositif de refroidissement selon une température actuelle du générateur d'éolienne et une ou plusieurs températures de référence, lorsque la puissance de sortie du générateur d'éolienne est inférieure à la puissance nominale du générateur d'éolienne.

8. Le système de commande de refroidissement du générateur d'éolienne selon la revendication 7, dans lequel les températures de référence comprennent une première température de référence et une deuxième température de référence, et la deuxième unité de commande de puissance (7022) comprend en outre une sous-unité de comparaison (70221) et une sous-unité de commande (70222) ;
dans lequel la sous-unité de comparaison (70221) est configurée pour comparer la température actuelle avec les températures de référence ; et
la sous-unité de commande (70222) est configurée pour :
commander le dispositif de refroidissement à fonctionner complètement dans le cas où la température actuelle est supérieure ou égale à la première température de référence ; et/ou commander le dispositif de refroidissement à fonctionner à moitié dans le cas où la température actuelle est supérieure ou égale à la deuxième température de référence et inférieure à la première température de référence ; et/ou
commander le dispositif de refroidissement à être fermé dans le cas où la température actuelle est inférieure à la deuxième température de référence.

9. Le système de commande de refroidissement du générateur d'éolienne selon la revendication 8, dans lequel le système de commande de refroidissement comprend en outre un premier module de réglage de température (703), configuré pour définir la première température de référence égale à la somme d'une première température prédéfinie et d'une température tampon prédéfinie, lorsque le générateur d'éolienne est dans un état de transition d'un état à pleine charge vers un état continu à charge partielle ; et/ou le premier module de réglage de température (703) est en outre configuré pour définir la deuxième température de référence égale à la somme d'une deuxième température prédéfinie et de la température tampon prédéfinie ;
et/ou
le système de commande de refroidissement comprend en outre un deuxième module de réglage de température (704), configuré pour définir la première température de référence égale à la première température prédéfinie et définir la deuxième température de référence égale à la deuxième température prédéfinie, lorsque le générateur d'éolienne est déjà dans l'état continu à charge partielle.

10. Le système de commande de refroidissement du générateur d'éolienne selon la revendication 9, dans lequel la deuxième unité de commande de puissance (7022) comprend en outre une sous-unité de prédéfinition (70223), une sous-unité d'obtention de niveau (70224), une sous-unité d'appariement (70225) et une sous-unité d'ajustement de niveau (70226) ;
la sous-unité de prédéfinition (70223) est configurée pour prédéfinir une correspondance entre la plage de température du générateur d'éolienne et le niveau de puissance cible du dispositif de refroidissement, dans laquelle les niveaux de puissance correspondent un à un aux puissances prédéfinies du dispositif de refroidissement ;
la sous-unité d'obtention de niveau (70224) est configurée pour obtenir un niveau de puissance actuel du dispositif de refroidissement ;
la sous-unité d'appariement (70225) est configurée pour obtenir un niveau de puissance cible du dispositif de refroidissement en effectuant une correspondance selon la température actuelle du générateur d'éolienne et la correspondance ; et
la sous-unité d'ajustement de niveau (70226) est configurée pour comparer le niveau de puissance actuel avec le niveau de puissance cible, et commander la puissance de consommation du dispositif de refroidissement à être d'au moins un niveau supérieur au niveau de puissance actuel si le niveau de puissance actuel est inférieur au niveau de puissance cible ; commander la puissance de consommation du dispositif de refroidissement à rester inchangée si le niveau de puissance actuel est égal au niveau de puissance cible ; et commander la puissance de consommation du dispositif de refroidissement à être d'au moins un niveau inférieur au niveau de puissance actuel si le niveau de puissance actuel est supérieur au niveau de puissance cible.

11. Le système de commande de refroidissement du générateur d'éolienne selon l'une quelconque des revendications 8 à 10, dans lequel le système de commande de refroidissement comprend en outre un module d'obtention de température (705) et un module de détermination de basse température (706) ;
le module d'obtention de température (705) est configuré pour obtenir une température actuelle du générateur d'éolienne ; et
le module de détermination de basse température (706) est configuré pour déterminer si la température actuelle est inférieure à un seuil de basse température, et si la température actuelle est inférieure au seuil de basse température, fermer le dispositif de refroidissement ou réduire la puissance de consommation du dispositif de refroidissement.

12. Un dispositif électronique, comprenant une mémoire, un processeur et un programme informatique stocké dans la mémoire et exécutable sur le processeur, dans lequel le processeur exécute le programme informatique pour mettre en œuvre un procédé de commande de refroidissement d'un générateur d'éolienne selon l'une quelconque des revendications 1 à 6.

13. Un support de stockage lisible par ordinateur sur lequel est stocké un programme informatique, dans lequel les étapes d'un procédé de commande de refroidissement d'un générateur d'éolienne selon l'une quelconque des revendications 1 à 6 sont mises en œuvre lorsque le programme informatique est exécuté par un processeur.
